# EUROPEAN PATENT APPLICATION

(11) **EP 3 427 841 A1**
(43) Date of publication of application: **16.01.2019**
(21) Application number: 17382361.8
(22) Date of filing: 13.06.2017
(51) Int. Cl.: B05B 12/16

(54) **MASKING METHOD**

(71) Applicant: Airbus Operations S.L., 28906 Getafe (ES)
(72) Inventor: GARCÍA NIETO, Carlos, E-28906 Getafe- Madrid (ES); CABRERA VALOR, Jaime, E-28906 Getafe- Madrid (ES); MOLINA MORENO, Rosario, E-28906 Getafe- Madrid (ES); GUILLÉN MORENO, María Pilar, E-28906 Getafe- Madrid (ES)
(74) Representative: ABG Intellectual Property, S.L.

(57) **Abstract**

The invention provides a method for masking an aeronautical structure with a frisket before painting such aeronautical structure, the method comprising the steps of: providing the aeronautical structure comprising at least one hole; providing the frisket; providing at least one jamming element, wherein said jamm ing element is configured to be inserted into the at least one hole; providing at least one C-shaped jamming element configured to be placed on a lateral of the first section; arranging the frisket partially over the at least one holen; inserting the at least one jamming element into the at least one hole, partially holding the frisket; wrapping the first section of the aeronautical structure with the frisket, said first section being masked to avoid its painting; and placing the at least one C-shaped jamming element laterally embracing the first section with the frisket, the frisket being clamped against said first section.

## Description

### TECHNICAL FIELD OF THE INVENTION

The present invention belongs to the field of painting, in particular to the field of masking large structures, difficult to handle, in order to avoid painting over non-intended areas. More specifically, the invention is of special application in any time-demanding industry as aeronautics, such as for painting a lifting surface like a wing or HTP.

### BACKGROUND OF THE INVENTION

Painting is a usual labour to carry out in aircrafts both during its manufacturing and during later maintenance. The common purposes for painting an aircraft comprise enhancing the protection from the operational environment, deterioration and corrosion, and likewise for identification as belonging to a company or organization, aesthetically. In addition, a properly painted aircraft is easier to clean and maintain because the exposed surfaces are more resistant to corrosion and dirt, while oil does not adhere as readily to the surface.

However, painting aircraft is a labor-intensive, multi-step process that requires high precision as a degree of refinement with which the steps are performed, with a great attention to details. The overall process of painting is a sequence of steps which comprises, among others, washing the structure and moving into a stable clean environment, preparing the surface as necessary, masking the elements non-intended for painting, positioning the paint scheme, and finally painting and evaluating the result.

The combination of a number of steps and the high precision required causes delays prompting the key drawback for the aeronautical industry. In assembly lines, the aeronautical structures roll over different stages carrying operations, which constitute a time-demanding process predetermining the production rate of aircrafts.

In this process, painting stage tends to be a bottleneck for large structures, while many operations, identified with lead times, should be done prior to paint. The highest lead time in large aeronautical structures such as a lifting surface corresponds to the process of masking the areas non-intended to be painted, such as erosion plates and control surfaces, e.g. elevator, rudder... This process of masking is known as the use of materials for protecting areas from change like being unintendedly painted, or to focus change on other areas.

Nowadays, the masking process is decisive in the field of painting in aeronautical industry, especially when manufacturing the lifting surface like the Horizontal Tail Plane (HTP). This is because experienced operators or workers have to place manually with high precision and knowledge a protecting element such as a frisket over the non-intended area to be painted and assure its placement by additional elements, such as masking tape, in a time-consuming labor.

### SUMMARY OF THE INVENTION

The present invention provides a solution for the aforementioned problems, by a method for masking an aeronautical structure according to claim 1, a method for painting an aeronautical structure according to claim 14, a jamming element according to claim 15, and an aeronautical structure according to claim 16. In dependent claims, preferred embodiments of the invention are defined.

In a first inventive aspect, the invention provides a method for masking an aeronautical structure with a frisket before painting such aeronautical structure, the aeronautical structure comprising a first section and a second section separated by a border, the method comprising the steps of:
a) providing the aeronautical structure comprising at least one hole in the first and/or the second section;
b) providing the frisket having an area substantially similar to the first section, being said first section intended to be masked;
c) providing at least one jamming element, said jamming element being configured to be inserted into the at least one hole of the first and/or the second section;
d) providing at least one C-shaped jamming element, said C-shaped jamming element being configured to be placed on a lateral of the first section;
e) arranging the frisket partially over the at least one hole of the first and/or second section;
f) inserting the at least one jamming element into the at least one hole of the first and/or second section, partially holding the frisket;
g) wrapping the first section of the aeronautical structure with the frisket, the wrapping masking said first section avoiding its painting; and
h) placing the at least one C-shaped jamming element laterally embracing the first section with the frisket, the frisket being clamped against said first section.

Throughout all this document, "frisket" will be understood as any material that is intended to protect an specific working area from unintended change, preferably from being painted. In particular, a frisket is a single sheet that covers the entire working area. Throughout this document, when referring to the masking process, the working area will be understood as the first section of the aeronautical structure.

Nevertheless, this process of masking may be used to protect a specific working area from any kind of surface treatment applied in the surrounding areas. Hence, the process of painting should be understood throughout all this document as equivalent to either applying any surface treatment, or coating, or a protective layer, or the like.Commonly, such friskets are in the form of a sheet made of any suitable material depending on the working performed, painting or applying another surface treatment as it has been defined.

Furthermore, the at least one hole in the first and/or the second section means that such at least one hole may be arranged entirely on the surface of either the first section or second section; or may be arranged over the border between said first and second sections.

Advantageously, this method allows, among others:
- reducing the lead time of the masking task before painting, increasing the production rate of aircrafts by means of a fast and cost-saving solution;
- performing the task of masking the aeronautical structure with a less number of operators or workers; and
- that such operators or workers do not need to be experienced because this method is easier to implement than the current solution in the state of the art.

Throughout all this document, it should be understood that any jamming element to be used has a corresponding hole, in the first and/or the second section, with a slightly smaller cross-sectional shape so that the jamming element is stuck along the periphery of said hole when inserted.

Also, inserting the at least one jamming element into the at least one hole of the first and/or second section means that the jamming element may be allocated up to the ground level of the first and/or second section; however, the inserting stops at the level in which it is stuck along the periphery of the hole.

In an embodiment, the frisket comprises more than one portions adapted to be joined between them, wherein the joined portions of the frisket comprises an area substantially similar to the first section intended to be masked.

In an embodiment, the at least one jamming element provided in step c) comprises:
- an internal surface, said internal surface partially holding the frisket during step f); and
- an external surface opposite the internal surface;
wherein said external surface comprises a slot configured to house a sealing strip, said sealing strip sealing the border between the first and second sections.

In an embodiment, the step g) comprises covering the at least one jamming element with the frisket. By this embodiment, the frisket is firstly arranged partially over the at least one hole towards the second section of the aeronautical structure; and after inserting the at least one jamming element into said at least one hole, the frisket is flipped over the jamming element in the opposite direction, towards the first section, for wrapping said first section. By this way, the at least one jamming element remains covered by the frisket preventing also from being painted.

Advantageously, this allows a better placement of the frisket wrapping the first section of the aeronautical structure and this also assures that the frisket may be reused several times.

The sealing strip will be understood as a long, dimensionally constant and narrow piece of an elastic material able to be housed into the slot of the jamming element, helping to prevent leakage of paint or another surface treatment, or exclude contamination, where the two sections join, i.e. the border. Preferably, the sealing strip prevents leakage from the second section towards the first section, during painting or applying a surface treatment on the second section. Once positioned, the sealing strip remains in contact throughout all its length with the border between the first and second sections.

In an embodiment, between steps g) and h) the method further comprises inserting a pin along with a portion of the frisket into a recess of the external surface of the at least one jamming element, attaching the frisket thereby.

The pin is thereby stuck into the recess along with a portion of the frisket, or may be otherwise piercing said portion of frisket to attach it. Advantageously, this allows that the frisket wraps closer the first section of the aeronautical structure, therefore preventing better its painting or application of the surface treatment.

In an embodiment, the steps e) to h) are performed automatically by at least one tool-head robot that comprises at least one robotic arm and at least one six-axis head. By this way, the robot may be a machine or part of a machine in which a tool or tool holder of is mounted and which is provided with adjustments to bring the tool into the desired position to perform automatically the programmed tasks. Moreover, by the at least one six-axis head mounted on the robotic arm, it is possible to move the tools into the three dimensions (XYZ) and also to rotate over the three main rotational axes (Pitch, Roll, Yaw). This six-axis head is configured to mount any tooling required to carry out the tasks during the masking.

Advantageously, the inventive solution about using a simpler and easier method to perform the method, in combination with using a programmed tool-head robot to perform the arranging and wrapping the frisket, and the inserting and placing of the jamming element and the C-shaped jamming elements (also the sealing strip if applies), give rise to a more effective process, reducing the lead time of the masking task thereby.

In an embodiment, the at least one jamming element provided in step c) further comprises QR codes or radio frequency identifications configured to be identified by the tool-head robot.

This allows not to mistake or mixed up the jamming elements, or C-shaped jamming elements in the automation of steps e) to h). Since each jamming element is configured to be inserted into a corresponding hole, if a wrong jamming element is brought by the tool-head robot and inserted into a non-corresponding hole, such jamming element may fall into such hole or being too big as to enter in such hole. Likewise, the same drawback is arisen about the C-shaped jamming element.

Additionally, this allows a faster automation of the sequence of bringing such elements to the aeronautical structure and later on positioning or inserting them, accordingly.

In an embodiment, the frisket provided in step b) is made of a membrane or a fiber reinforced polymer.

Since the robotic arm needs means for bringing the frisket, e.g. by clams or suckers, the frisket need to be more resistant than current friskets, which are weak and breakable, being substituted thus by a thicker one.

In an embodiment, the at least one jamming element and the at least one C-shaped jamming element provided in steps c) and d), are manufactured by an additive manufacturing machine, such as a 3D printing machine.

Advantageously, additive manufacturing technology, such as 3D printing, eases the "in-situ" testing of the method and the initial set-up in different aeronautical structures. Furthermore, it allows manufacturing fast and economically the jamming elements and the C-shaped jamming elements providing higher versatility on painting stage; along with retrofitability to be used between different aeronautical structures. Later on, definitive devices for the method can be manufactured in other more appropriate materials/technologies.

In an embodiment, the aeronautical structure provided in step a) is a lifting surface, preferably a Horizontal Tail Plane (HTP), wherein the second section is a torsion box, and the first section is an elevator of the lifting surface.

The lifting surface, such as an HTP, is a huge element difficult to handle which requires more than one experienced operator or worker to carry out the tasks of masking. Advantageously, by this method, the most time-consuming and complex structure to mask is easily performed quicker, more reliable and with better results; along with allowing being performed only by one worker, with no need of being experienced.

In an embodiment, the at least one hole of the aeronautical structure provided in step a) is an elevator bearing rib hole located adjacent to the border.

Advantageously, the elevator bearing rib holes are housings located in the upper surface of the Horizontal Tail Plane, those housings are intended for inspection of the ribs of the aeronautical structure from outside. Therefore, those housings are elements present in the majority of lifting surfaces and also are substantially same spaced along the edge or border of the elevator in the upper surface of the HTP.

By using these elevator bearing rib holes to insert the at least one jamming element, it is achieved that there is no need of additional positioning of the elevator to let see the housing. Nevertheless, in a preferred embodiment, a deflection of 15º of the elevator is helpful to allow inserting properly the jamming element into the elevator bearing rib hole.

In a preferred embodiment, the aeronautical structure comprises six elevator bearing rib holes, preferably with different shapes and sizes.

In an embodiment, step h) comprises placing two C-shaped jamming elements at opposite lateral sides of said first section of the structure.

In an embodiment, step h) comprises:
- placing one C-shaped jamming element, i.e. a root C-shaped jamming element, laterally embracing the first section with the frisket by the root side of the torsion box of the aeronautical structure, and
- placing other C-shaped jamming element , i.e. a root C-shaped jamming element, laterally embracing the first section with the frisket by the tip side of the torsion box of the aeronautical structure.

In this embodiment, the torsion box has a thicker end corresponding to the root, and a thinner end corresponding to the tip. The root is the part of the torsion box intended to be closest to the fuselage when assembled; wherein the tip is the part of the torsion box that is most distant from the fuselage in same assembling.

Advantageously, this allows a better tightening of the frisket against the first surface.

In an embodiment, the border is a gap between a trailing edge of the torsion box and the elevator.

In this embodiment, the torsion box comprises four lateral sides, i.e. a root, a tip, a trailing edge facing the elevator, and a leading edge wherein the erosion plate is mounted and intended to face the upstream flow. Therefore, the slot of the jamming element housing a sealing strip is able to prevent leakage or application of paint or surface treatment to inside the first section, said sealing strip sealing being introduced in the gap up to at the ground level of the surface between the torsion box and elevator.

In a second inventive aspect, the invention provides a method for painting an aeronautical structure, the aeronautical structure comprising a first section and a second section, the method comprising the steps of:
▪ providing paint for painting the second section of the aeronautical structure;
▪ masking the first section of the aeronautical structure according to any of claims 1-13; and
▪ painting said second section of the aeronautical structure.

As it was previously defined, the process of painting should be understood as equivalent to applying any surface treatment, coating, protective layer or the like, to the surface of the aeronautical structure. Furthermore, this process of applying paint to a surface may be performed by any suitable means, e.g. brushes, knives, sponges, airbrushes, or the like; being considered all of them as equivalent through this document.

In a third inventive aspect, the invention provides a jamming element provided in the step c) of the method of masking, wherein said jamming element comprises:
▪ an internal surface suitable for partially holding a frisket during step f),
▪ an external surface opposite the internal surface, comprising a substantially straight and dimensionally constant slot extending entirely adjacent to the border of said external surface and being configured to house a sealing strip;
the internal surface further comprising a substantially elongated protrusion configured to be seated onto an internal element of an aeronautical structure; and
the external surface further comprising:
- a recess configured to be inserted by a pin, and
- a handle configured to operate the jamming element during its detaching.

In a fourth inventive aspect, the invention provides an aeronautical structure being masked or painted using the method of masking according to the first inventive aspect, or the method according to the second inventive aspect, respectively.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1a: This figure shows different views of a jamming element.
- Figure 1b: This figure shows a series of jamming elements housing a sealing strip in their slots.
- Figure 1c: This figure shows different C-shaped jamming elements.
- Figure 2a: This figure shows the aeronautical structure comprising holes in the elevator.
- Figure 2b: This figure shows two views of the aeronautical structure with the jamming elements inserted and the C-shaped jamming elements placed.
- Figure 3: This figure shows a schematic flowchart of the method for masking an aeronautical structure.
- Figure 4: This figure shows an embodiment of the method for masking an aeronautical structure.
- Figure 5: This figure shows a schematic tool-head robot.
- Figure 6: This figure shows a schematic flowchart of an automated method for masking an aeronautical structure.

### DETAILED DESCRIPTION OF THE INVENTION

### Jamming elements (4) and C-shaped jamming elements (5)

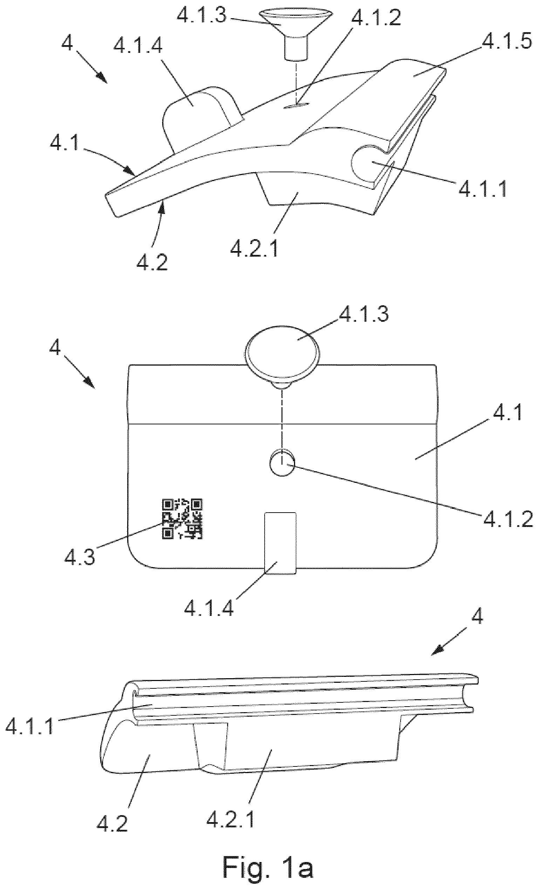

Figure 1a shows a lateral, upper and rear view of a jamming element (4). It is to be noted that this is an exemplary illustration since the cross-sectional shape depends on the shape of the corresponding hole (2.2); therefore each jamming element (4) used in an aeronautical structure (1) may have a different cross-sectional shape and size according to the hole where it is to be inserted.

The jamming element (4) comprises:
▪ an internal surface (4.2) facing the interior (1.1) of the aeronautical structure (1) when inserted, therefore being positioned inside the hole (2.2) in such position;
▪ an external surface (4.1) opposite the internal surface (4.2), comprising a substantially straight and dimensionally constant slot (4.1.1) extending entirely adjacent to the border (2.1) of said external surface (4.1) and being configured to house a sealing strip (6).

As can be seen, the slot (4.1.1) additionally comprises a coverage (4.1.5) configured to assure the housing of the sealing strip (6) and also to improve the covering of the joining between the external surface (4.1) and the second section (2.5).

The internal surface (4.2) further comprises a substantially elongated protrusion (4.2.1) configured to be seated onto an internal element of the interior (1.1) of the aeronautical structure (1). Hence, the seating of the protrusion (4.2.1) onto the internal element, e.g. a rib, determines the entering of the jamming element (4) into the hole (2.2).

Furthermore, the external surface (4.1) further comprises:
- a recess (4.1.2) configured to be inserted by a pin (4.1.3) attaching the frisket in the middle, and
- a handle (4.1.4) configured to operate the jamming element (4) during its detaching. Therefore, the handle (4.1.4) may be accessible from outside the aeronautical structure (1) even when the jamming element (4) is inserted.

Additionally, the at least one jamming element comprises QR codes or radio frequency identifications (4.3) configured to be identified by the tool-head robot (7).

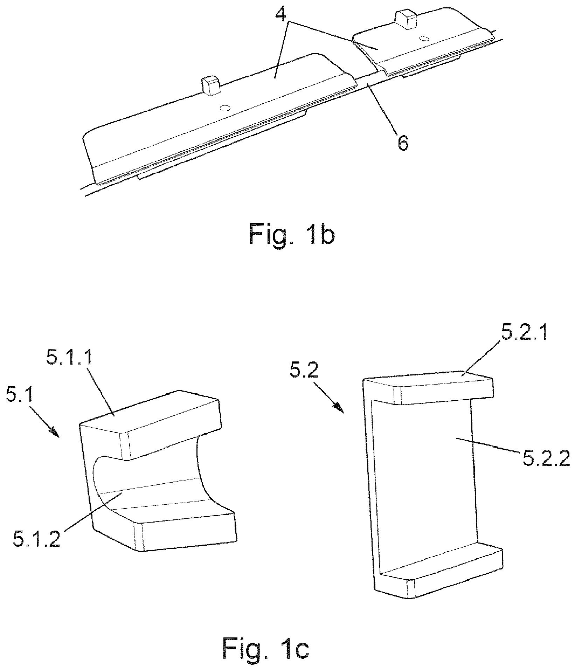

Figure 1b shows two consecutive jamming elements (4), both housing the same sealing strip (6) in their slots. Preferably, the sealing strip (6) is made of rubber. For illustrative purposes, the jamming elements (4) are not shown inserted into their corresponding holes (2.2). In addition, both jamming elements (4) comprise a different cross-sectional shape and size according to the corresponding hole (2.2) to be inserted.

Figure 1c shows two different C-shaped jamming elements (5) according to an embodiment of the present invention. The tip C-shaped jamming element (5.1) is configured to laterally embrace the first section (2), i.e. the elevator, from the tip side (2.6) of the torsion box (2.5) of the lifting surface (1), and root C-shaped jamming element (5.2) is configured to laterally embrace the first section (2), i.e. the elevator, from the root side (2.7) of the torsion box (2.5) of the aeronautical structure (1).

Throughout this document, in the event the aeronautical structure (1) is a lifting surface; the second surface (2.5) is equivalent to the torsion box, and the first section (2) is equivalent to the elevator.

The tip C-shaped jamming element (5.1) comprises an external surface (5.1.1) and an internal surface (5.1.2) reproducing a complementary shape of a portion of the elevator by the tip side (2.6). Also, the shape of said internal surface (5.1.2) must be slightly smaller than the portion of the elevator by the tip side (2.6) to assure clamping a frisket (3) against said first section (2) when the tip C-shaped jamming element (5.1) is placed.

The root C-shaped jamming element (5.2) comprises an external surface (5.2.1) and an internal surface (5.2.2) reproducing a complementary shape of a portion of the elevator by the root side (2.7). Also, the shape of said internal surface (5.2.2) must be slightly smaller than the portion of the elevator by the root side (2.7) to assure clamping the frisket (3) against said first section (2) when the root C-shaped jamming element (5.2) is placed.

In a particular embodiment, the tip (5.1) and root (5.2) C-shaped jamming elements comprise QR codes or radio frequency identifications (not shown in the figure) configured to be identified by the tool-head robot (7).

### Aeronautical structure (1) before and after placing and inserting the elements (4, 5)

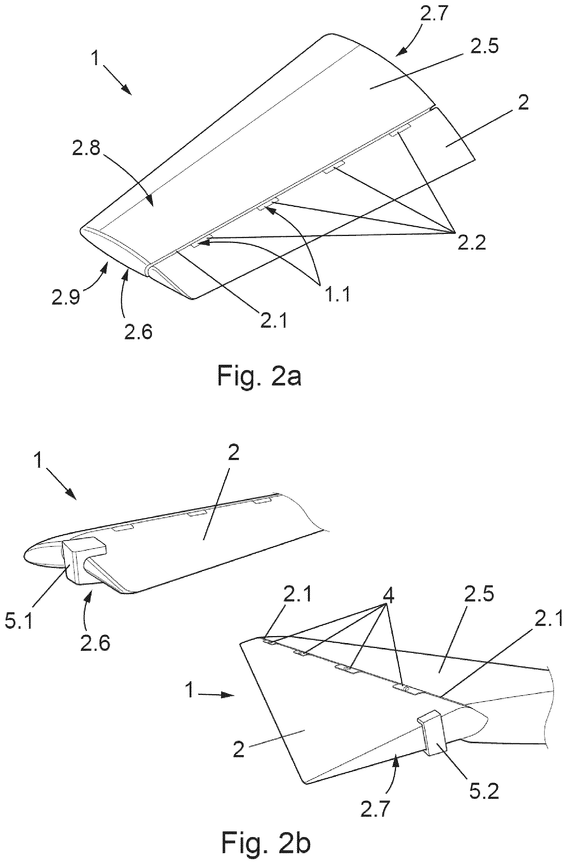

Figure 2a shows the configuration of the aeronautical structure (1) provided in the method of masking, previously to perform the next steps of said method. As can be seen, the aeronautical structure (1) is a lifting surface, i.e. a wing or a HTP, comprising an upper surface (2.8) and a lower surface (2.9). Furthermore, the lifting surface (1) comprises a first section or elevator (2), and a second section or torsion box (2.5).

In other embodiments, the first section (2) is another structural part of the lifting surface, such as the leading edge erosion plate or the like.

In addition, the torsion box (2.5) comprises a root and a tip, and therefore the lifting surface or aeronautical structure (1) comprises a root side (2.7) and a tip side (2.6). Likewise, the root side (2.7) and tip side (2.6) of the lifting surface (1) also apply to the elevator (2).

The torsion box (2.5) comprises a leading edge intended to attach the erosion plate, and a trailing edge intended to attach the elevator (2); and thus the border (2.1) between the elevator (2) and torsion box (2.5) is formed by the gap between a trailing edge of the torsion box (2.5) and the elevator (2).

As can be seen, the elevator bearing rib holes (2.2) are located adjacent to the border (2.1) in the upper surface (2.8) of the lifting surface, particularly in the upper surface of the elevator (2).

Figure 2b shows two views of the aeronautical structure or lifting surface (1) shown in figure 2a, but with jamming elements (4) inserted in the final configuration and the C-shaped jamming elements (5.1, 5.2) placed. For illustrative purposes, the frisket (3) is not shown in Fig. 2b.

Left figure of figure 2b is a view from the tip side (2.6) of the aeronautical structure (1) showing the tip C-shaped jamming element (5.1). On the other hand, right figure of figure 2b is a view from the root side (2.7) of the aeronautical structure (1) showing the root C-shaped jamming element (5.2). Also, it is shown a series of jamming elements (4) inserted into their corresponding holes (2.2) in the elevator (2) extending adjacent to the gap (2.1).

### Method for masking the elevator (2) of a Horizontal Tail Plane (1) with a frisket (3)

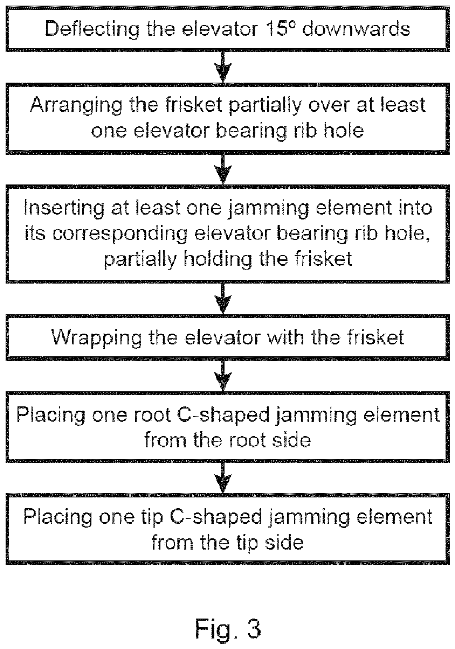

Figure 3 shows schematically a flowchart with the sequence for masking the elevator (2) of the Horizontal Tail Plane (1) with a frisket (3). The sequence comprising the steps of:
i. deflecting the elevator (2) of the HTP (1) 15º downwards;
ii. arranging the frisket (3) partially over at least one elevator bearing rib hole (2.2) of said elevator (2),
iii. inserting at least one jamming element (4) into the at least one elevator bearing rib hole (2.2) of the elevator (2), partially holding the frisket (3);
iv. wrapping the elevator (2) of the HTP (1) with the frisket (3), said elevator (2) being masked to avoid applying paint or another surface treatment;
v. placing one root C-shaped jamming element (5.2) laterally embracing the elevator (2) with the frisket (3) from the root side (2.7); and
vi. placing one tip C-shaped jamming element (5.1) laterally embracing the elevator (2) with the frisket (3) from the tip side (2.6).

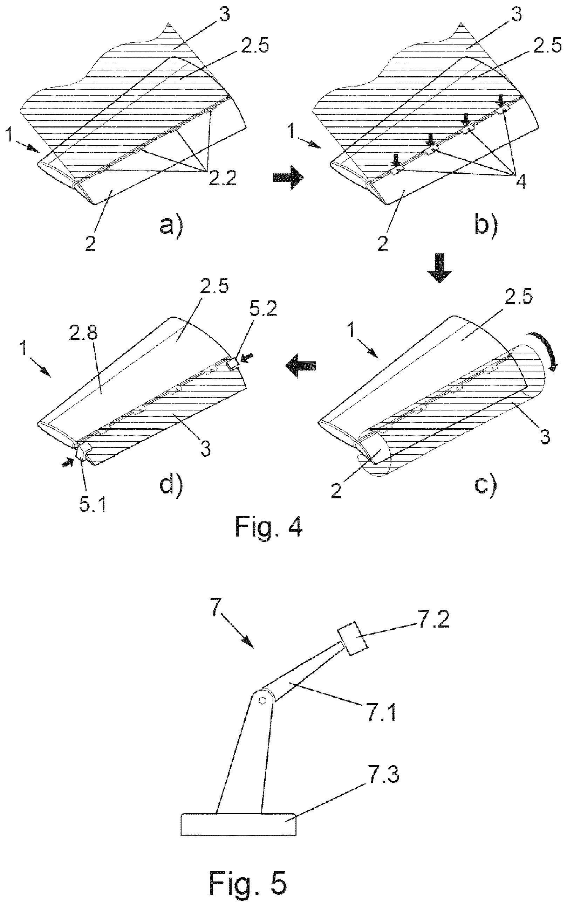

Figure 4 shows a sequence for masking the elevator (2) of the Horizontal Tail Plane (1), wherein at least one jamming element (4) is covered with the frisket (3). The sequence comprises the steps of:
i. figure a) in the top left: the frisket (3) is arranged partially over the at least one elevator bearing rib hole (2.2) towards the torsion box (2.5);
ii. figure b) in the top right: inserting the at least one jamming element (4) into the corresponding elevator bearing rib hole (2.2), partially holding the frisket (3);
iii. figure c) in the bottom right: the frisket (3) is flipped over the at least one jamming element (4) towards the elevator (2), for wrapping thereof;
iv. figure d) in the bottom left: the root C-shaped jamming element (5.2) is placed laterally embracing the elevator (2) with the frisket (3) from the root side (2.7), and the tip C-shaped jamming element (5.1) is placed laterally embracing the elevator (2) with the frisket (3) from the tip side (2.6).

### Method for automatically masking the elevator (2) of a Horizontal Tail Plane (1) with a frisket (3)

Figure 5 shows a schematic drawing of a tool-head robot (7) that comprises at least one robotic arm (7.1) connected at one end to a supporting base (7.3), and connected at the other end to at one six-axis head (7.2).

The six-axis head (7.2) or hexapod comprises a 6-axis (XYZ, Pitch, Roll, Yaw) actuator for moving in each direction or around each rotation axis. In addition, the six-axis head (7.2) comprises a tool kit with the tool required to automatically perform the steps e) to h) of the method of masking the aeronautical structure according to a first inventive aspect of the invention.

In a particular embodiment, the supporting base (7.3) of the tool-head robot (7) is mounted on a rail (not shown in the figures) to allow displacement of the tool-head robot (7) rolling over stages in the assembly line. Optionally, this displacement of the tool-head robot (7) rolling over stages in the assembly line may be performed by wheels on the supporting base (7.3) (not shown in the figures) following markers in the floor, preferably using Automatic Guided Vehicle technology. In both particular embodiments, the tool-head robot (7) incorporates detecting means, e.g. object recognition tool, to avoid any clash with the aeronautical structure (1) that could cause damage thereto.

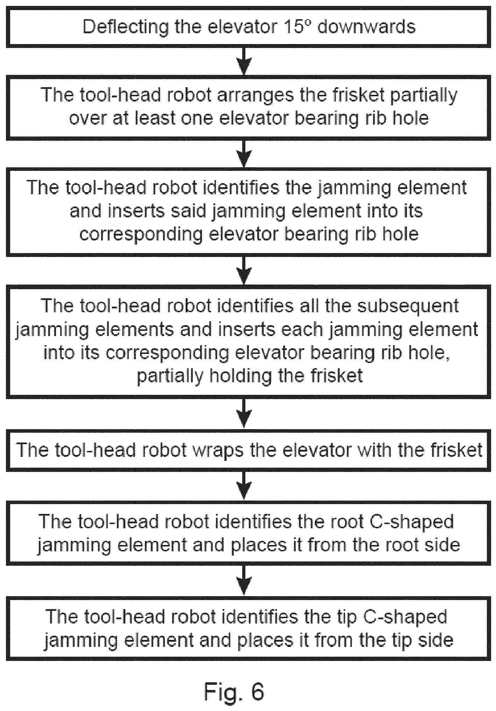

Figure 6 shows schematically a flowchart with the sequence for automatically masking the elevator (2) of the Horizontal Tail Plane (1) with a frisket (3) by using a tool head robot (7.2). This sequence comprising the steps of:
i. deflecting the elevator (2) of the HTP (1) 15º downwards;
ii. the tool-head robot (7) arranging the frisket (3) using the six-axis head (7.2) partially over at least one elevator bearing rib hole (2.2) of said elevator (2),
iii. the tool-head robot (7) identifying the jamming element (4) to be inserted by its QR code (4.3) and inserting said jamming element (4) into the corresponding elevator bearing rib hole (2.2) of the elevator (2);
iv. identifying and inserting the subsequent jamming elements (4) to be inserted into their corresponding elevator bearing rib holes (2.2) of the elevator (2), partially holding the frisket (3);
v. the tool-head robot (7) wrapping the elevator (2) of the HTP (1) with the frisket (3), said elevator (2) being masked to avoid applying paint or another surface treatment;
vi. the tool-head robot (7) identifying the tip C-shaped jamming element (5.1) to be placed by its QR code and placing said tip C-shaped jamming element (5.1) laterally embracing the elevator (2) with the frisket (3) from the tip side (2.6); and
vii. the tool-head robot (7) identifying the root C-shaped jamming element (5.2) to be placed by its QR code and placing said tip C-shaped jamming element (5.2) laterally embracing the elevator (2) with the frisket (3) from the root side (2.7).

## Claims

1. Method for masking an aeronautical structure (1) with a frisket (3) before painting such aeronautical structure (1), the aeronautical structure comprising a first section (2) and a second section (2.5) separated by a border (2.1), the method comprising the steps of:
a) providing the aeronautical structure (1) comprising at least one hole (2.2) in the first (2) and/or the second section (2.5);
b) providing the frisket (3) having an area substantially similar to the first section (2), being said first section (2) intended to be masked;
c) providing at least one jamming element (4), said jamming element (4) being configured to be inserted into the at least one hole (2.2) of the first (2) and/or the second section (2.5);
d) providing at least one C-shaped jamming element (5.1, 5.2), said C-shaped jamming element (5.1, 5.2) being configured to be placed on a lateral of the first section (2);
e) arranging the frisket (3) partially over the at least one hole (2.2) of the first (2) and/or second section (2.5);
f) inserting the at least one jamming element (4) into the at least one hole (2.2) of the first (2) and/or second section (2.5), partially holding the frisket (3);
g) wrapping the first section (2) of the aeronautical structure (1) with the frisket (3), the wrapping masking said first section (2) avoiding its painting; and
h) placing the at least one C-shaped jamming element (5.1, 5.2) laterally embracing the first section (2) with the frisket (3), the frisket (3) being clamped against said first section (2).

2. The method according to claim 1, wherein the at least one jamming element (4) provided in step c) comprises:
- an internal surface (4.2), said internal surface (4.2) partially holding the frisket (3) during step f); and
- an external surface (4.1) opposite the internal surface (4.2);
wherein said external surface (4.1) comprises a slot (4.1.1) configured to house a sealing strip (6), said sealing strip (6) sealing the border (2.1) between the first (2) and second (2.5) sections.

3. The method according to any of the previous claims, wherein step g) comprises covering the at least one jamming element (4) with the frisket (3).

4. The method according to the previous claim, wherein between steps g) and h) the method further comprises inserting a pin (4.1.3) along with a portion of the frisket (3) into a recess (4.1.2) of the external surface (4.1) of the at least one jamming element (4), attaching the frisket (3) thereby.

5. The method according to any of the previous claims, wherein the steps e) to h) are performed automatically by at least one tool-head robot (7) that comprises at least one robotic arm (7.1) and at least one six-axis head (7.2).

6. The method according to the previous claim, wherein the at least one jamming element (4) provided in step c) further comprises QR codes or radio frequency identifications (4.3) configured to be identified by the tool-head robot (7).

7. The method according to any of claims 5 or 6, wherein the frisket (3) provided in step b) is made of a membrane or a fiber reinforced polymer.

8. The method according to any of the previous claims, wherein the at least one jamming element (4) and the at least one C-shaped jamming element (5.1, 5.2) provided in steps c) and d), are manufactured by an additive manufacturing machine, such as a 3D printing machine.

9. The method according to any of the previous claims, wherein the aeronautical structure (1) provided in step a) is a lifting surface, preferably an Horizontal Tail Plane (HTP), wherein the second section (2.5) is a torsion box, and the first section (2) is an elevator of the lifting surface.

10. The method according to any of the previous claims, wherein the at least one hole (2.2) of the aeronautical structure (1) provided in step a) is an elevator bearing rib hole located adjacent to the border (2.1).

11. The method according to any of the previous claims, wherein step h) comprises placing two C-shaped jamming elements (5.1, 5.2) at opposite lateral sides of said first section (2) of the structure (1).

12. The method according to claims 9 and 11, wherein step h) comprises:
- placing one root C-shaped jamming element (5.2) laterally embracing the elevator (2) with the frisket (3) from the root side (2.7) of the torsion box (2.5) of the aeronautical structure (1), and
- placing one tip C-shaped jamming element (5.1) laterally embracing the elevator with the frisket (3) from the tip side (2.6) of the torsion box (2.5) of the aeronautical structure (1).

13. The method according to any of the previous claims when depending on claims 2 and 5, wherein the border (2.1) is a gap between a trailing edge of the torsion box (2.5) and the elevator (2).

14. Method for painting an aeronautical structure (1), the aeronautical structure comprising a first section (2) and a second section (2.5), the method comprising the steps of:
▪ providing paint for painting the second section (2.5) of the aeronautical structure (1);
▪ masking the first section (2) of the aeronautical structure (1) according to any of claims 1-13; and
▪ painting said second section (2.5) of the aeronautical structure (1).

15. A jamming element (4) provided in the step c) of the method of any of claims 1-13, wherein said jamming element (4) comprises:
▪ an internal surface (4.2) suitable for partially holding a frisket (3) during step f),
▪ an external surface (4.1) opposite the internal surface (4.2), comprising a substantially straight and dimensionally constant slot (4.1.1) extending entirely adjacent to the border (2.1) of said external surface (4.1) and being configured to house a sealing strip (6);
the internal surface (4.2) further comprising a substantially elongated protrusion (4.2.1) configured to be seated onto an internal element of an aeronautical structure (1); and
the external surface (4.1) further comprising:
- a recess (4.1.2) configured to be inserted by a pin (4.1.3), and
- a handle (4.1.4) configured to operate the jamming element (4) during its detaching.

16. An aeronautical structure (1) being masked or painted using the method according to any of claims 1-13, or the method according to claim 14, respectively.
